# EUROPEAN PATENT SPECIFICATION

(11) **EP 0 950 355 B1**
(45) Date of publication and mention of the grant of the patent: **30.07.2003**
(21) Application number: 98870080.3
(22) Date of filing: 14.04.1998
(51) Int. Cl.: A23B 7/04, A23B 7/05, A23B 7/055

(54) **Frozen fruit salad**
Gefrorener Früchtesalat
Salade de fruits congelée

(43) Date of publication of application: 20.10.1999
(73) Proprietor: dirafrost F.F.I. n.v., 3540 Herk-de-Stad (BE)
(72) Inventor: Ramaekers, Georges, 3210 Linden-Lubbeek (BE)
(74) Representative: Van Malderen, Joelle

(56) References cited:
- EP-A- 0 560 509
- WO-A-85/01340
- WO-A-95/20324
- WO-A-96/26652
- FR-A- 2 628 943
- US-A- 3 607 313
- US-A- 3 868 470
- US-A- 4 478 861
- US-A- 5 223 293
- Belitz, H.-D., Grosch W., Food Chemisrty, 2nd ed., 1999, Heidelberg, Berlin (p.790); translation of 4th German edition (1992).

## Description

### Field of the invention

The invention relates to a frozen fresh fruit salad which is easily and immediately consumable after defrosting, and to its preparation method.

### State of the art

Fresh fruit salads are usually either freshly prepared or are conserved after sterilisation in a packaging. Fresh fruit salads usually comprise a syrup made of a liquid with sugar.

A major drawback of these fresh fruit salads is that they will present a brown coloration after a short conservation period. This problem is usually solved by adding to the syrup an edible acid such as citric and/or ascorbic acid. However, said fresh fruit salads can be conserved for a very limited period of time (about 5 days).

On the other hand, fruit salads conserved in sterile packaging can be stored for many years. However, for the consumer, these conserved fruit salads do not present organoleptic properties comparable to the ones of fresh fruit salads.

These products, also known as "Macedoine", are prepared by filling sterile packaging such as cans with blanched fruit pieces before submitting said cans to a heating treatment.

The European Patent Application EP-0572754 describes a conservation method of fresh melon pieces by freezing (cryogenation).

It is also possible to freeze fresh fruit salads. However, the result for the consumer will be a block containing both fruit pieces and sauce, clogged together in a solid lump. Therefore, the obtained product will not satisfy the consumer and will not be easily portionable.

Other publications have described methods for coating frozen foodstuff with edible liquids.

The European Patent Application EP-0560509 describes a method for preparing a coated, frozen foodstuff such as fat-containing sauce with pre-cooked frozen fish, frozen meat, frozen vegetables or a mixture thereof. The obtained product should be further treated by an additional cooking after defrosting before it is presented to the consumer.

If the teaching of said document is transferred to the preparation of fruit salads, the obtained product will be an unattractive fruit salad containing soggy pieces of fruit.

### Aims of the invention

The present invention aims to provide a frozen fresh fruit salad and its preparation process which do not present the drawbacks of the state of the art.

A main aim of the present invention is to provide such frozen fresh fruit salad which is easily portionable in its frozen state, which is easily and immediately consumable after defrosting, and which presents organoleptic properties comparable to the ones of a freshly made fruit salad.

### General description of the invention

The invention is a method for preparing frozen fruit salad wherein frozen or deep-frozen fruit pieces are coated with an edible coating juice according to claim 1. The method for preparing frozen fruit salad in which the frozen or deep-frozen fresh fruit material is coated with an edible coating juice wherein said method preferably comprises the following steps :
- loading a continuously agitated sealed preparation container with fruit pieces,
- deaerating said container,
- dosing the coating juice into said container, and
- cryogenation of the mixture.

The deaeration step of said container can comprise lowering the pressure to 0.2 bar or less.

The coating juice preferably comprises sugar and/or fruit purée.

The sugar (sugar solid or liquid) concentration lies preferably between 10 and 25 %.

The purée concentration lies preferably between 20 and 40 %.

The coating juice can further comprise one or more ingredients selected from the group consisting of colorants, food grade acids and/or aromas. The fruit pieces can already be frozen before the deaerating step.

The fruit pieces are preferably selected from the group consisting of: apple, pear, orange, grape, melon, peach, banana, kiwi, litchi, grapefruit, lemon, lime, raspberry, papaya, cherry, pineapple, durian, strawberry, blackberry, blueberry, bilberry, boysenberry, redcurrant, black-currant, guava, mandarin, mango, granadilla and/or a mixture thereof.

### Detailed description of the invention

The frozen fruit salad according to the invention is obtained from IQF (Individual Quick Frozen) fruits. According to the invention, fruits are individually encapsulated with the juice. The obtained product will be an IQF fruits mixture which becomes a fruit salad after thawing.

The obtained product can be compared with the fresh fruit salad. The mixture and encapsulating are realised under low temperature and LN conditions, so that microbiological reduction finds place.

The storage life of the obtained product under deep freeze temperature conditions (-20 °C) can reach two years. Advantageously, the life time after thawing and storage at +2 °C will be around one week.

The obtained product is easily portionable into individual portions and a simple packaging of the obtained product into bags is possible.

It seems that the advantageous properties of the obtained product are obtained because the juice quantity of the fruit salad is proportional to the osmotic pressure of the juice. Therefore, it is important to change the osmotic pressure in function of the juice quantity used in the salad.

In addition, encapsulation of individual quick frozen fruits is obtained at a lower energetic cost than with the conventional known techniques.

Other advantageous properties of the product and its preparation process are described in the enclosed examples, presented as an illustration of the present invention.

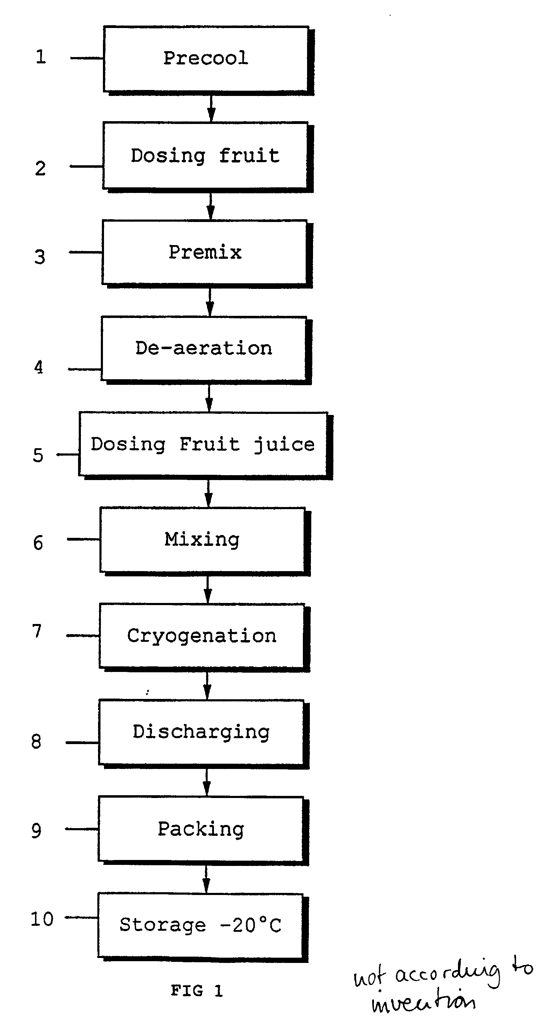

As shown in Figure 1 and according to the seasonable harvest of fruits, the ingredient fruits, selected according to their taste, their colour, their size and their availability, are if necessary cut up in pieces of an appropriate size (2). These portions of fruits are mixed in a special vessel under low temperature (-25 °C) (Premix step) (3). The vessel has been precooled to -25°C with liquid nitrogen (1). The mixing time in the premix step can be adapted by the person skilled the art according to the different used types of fruits.

After mixing, the vessel is deaerated to a pressure of about 0.2 bar (4). Next, the juice is introduced centrally in the mass of fruits while the whole is continuously mixed (5,6).

The coating juice can be composed of a mixture of fruit purees and/or fruit juices and sugar. The mixture selected depends on the type of fruit pieces used and the taste that has to be obtained. An example of such a juice can contain Passion purée, Lemon purée, Raspberry purée and sugar.

Purée concentration may vary between 20 and 40 %, sugar concentration between 10 and 25 %.

Important is that the coating juice has an osmotic pressure that is equal to or higher than the osmotic pressure of the fruit pieces.

Other ingredients can be added, such as colorants, food grade acids (such as citric and ascorbic acid) and aromas. Such ingredients can be added to the fruit pieces separately or mixed with the coating juice.

Any kind of fruit pieces or whole fruits (such as grapes) can be used. Some kinds of fruits however are less suitable for freezing (such as strawberries). This is inherent to the structure of the fruit itself, and is not a shortcoming of the method as disclosed in the present invention.

The juice, which is dispersed on the fruit pieces will solidify on the cold surface of the fruit pieces, thus forming a coating layer on the fruit pieces.

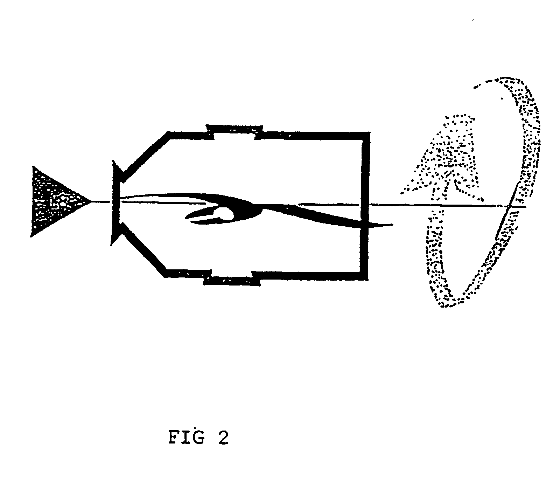

The production of the fruit salad takes place in a sealed, continuously agitated vessel, such as can be seen in Figure 2.

Liquid nitrogen is added at about -196 °C into the mass in order to cryogenate the whole. The nitrogen evaporates and is allowed to escape to the atmosphere after the vapour has been used for cooling the product.

The use of very high freezing rates results in an improved texture of the mixture, particularly in the coating of the fruits.

The amount of liquid nitrogen necessary in the process according to the invention is in the order of 0.7 kg/kg product.

The use of said cryogenization guarantees also the microbiological stability of the obtained product.

After defrosting, the fruit salad according to the invention presents the same organoleptic properties compared to a freshly prepared fruit salad, and can be used as such as dessert and breakfast.

### Example 1 : Fruit salad Exotic

### Ingredients for 1 kg :

| **Ingredient** | **Weight (gr)** |
|---|---|
| | |

| ***Frozen fruits in pieces :*** | |
|---|---|
| Melon yellow balls | 140 |
| Melon green balls | 105 |
| Pineapple (15/15) | 168 |
| Grape blue | 35 |
| Grape yellow | 84 |
| Papaya (15/15) | 84 |
| Mango (15/15) | 84 |

| ***Juice :*** | |
|---|---|
| Exotic purée | 120 |
| Sugar liquid | 75 |

| ***Other ingredients :*** | |
|---|---|
| Water | 104.55 |
| Ascorbic acid | 0.45 |

### Preparation :

- Mix the quantity juice ingredients at about 0 °C temperature in function of the quantity of fruit at achieve a percentage of 30%
- Store the juice in the juice tank
- Precool the vessel to about -25 °C with the liquid nitrogen
- Enter the fruits into the vessel and mix during 5-10 min
- Dearate the vessel to a pressure of 0.2 bar
- Introduce the juice into the vessel together with liquid nitrogen and continuously mix during about 8 min
- Refrigerate the continue of the vessel at a temperature of about -60 °C during about 45 min
- Open the vessel for inspection, regarding the coating, and
- Fill the fruit salad in sterile packaging.

## Claims

1. A method for preparing frozen fruit salad wherein frozen or deep-frozen fruit pieces are coated with an edible coating juice, and **characterised in that** said coating juice has an osmotic pressure that is equal to or higher than the osmotic pressure of the fruit pieces.

2. A method as in claim 1, **characterised in that** said method comprises the following steps :
- loading a continuously agitated sealed preparation container with fruit pieces,
- deaerating said container,
- dosing the coating juice into said container, and
- cryogenation of the mixture.

3. A method as in claim 2, further **characterised in that** the deaeration step of said container comprises lowering the pressure to 0.2 bar or less.

4. A method as in any of the claims 1 to 3, **characterised in that** the coating juice comprises sugar and/or fruit purée.

5. A method as in claim 4, **characterised in that** the sugar concentration lies between 10 and 25 %.

6. A method as in claim 4 or 5, **characterised in that** the purée concentration lies between 20 and 40 %.

7. A method as in any of the claims 4 to 6, **characterised in that** the coating juice further comprises one or more ingredients selected from the group consisting of colorants, food grade acids and/or aromas.

8. A method as in any of the claims 2 to 7, **characterised in that** the fruit pieces are frozen before the deaerating step.

9. A method as in any of the claims 1 to 8, **characterised in that** the fruit pieces are selected from the group consisting of: apple, pear, orange, grape, melon, peach, banana, kiwi, litchi, grapefruit, lemon, lime, raspberry, papaya, cherry, pineapple, durian, strawberry, blackberry, blueberry, bilberry, boysenberry, rad-currant, black-currant, guava, mandarin, mango, granadilla and/or a mixture thereof.

## Patentansprüche

1. Verfahren für die Zubereitung eines gefrorenen Obstsalates wobei die gefrorenen oder tiefgefrorenen Obststücke mit einem essbaren Beschichtungssaft umhüllt werden, **dadurch gekennzeichnet, dass** der besagte Beschichtungssaft einen osmotischen Druck aufweist, welcher der gleiche ist oder größer ist als der osmotische Druck der Obststücke.

2. Verfahren gemäß Anspruch 1, **dadurch gekennzeichnet, dass** das besagte Verfahren die folgenden Schritte aufweist:
- Füllen eines kontinuierlich geschüttelten, versiegelten Zubereitungsbehälters mit Obststücken,
- Entlüften des besagten Behälters
- Dosieren des Beschichtungssaftes in den besagten Behälter,
- Kryogenisieren der Mischung.

3. Verfahren gemäß Anspruch 2, ferner **dadurch gekennzeichnet, dass** der Entlüftungsschritt des besagten Behälters ein Herabsetzen des Druckes auf 0,2 bar oder weniger umfasst.

4. Verfahren gemäß irgendeinem der Ansprüche 1 bis 3, **dadurch gekennzeichnet, dass** der Beschichtungssaft Zucker und / oder Fruchtmark enthält.

5. Verfahren gemäß Anspruch 4, **dadurch gekennzeichnet, dass** die Konzentration des Zuckers zwischen 10 und 25 % liegt.

6. Verfahren gemäß Anspruch 4 oder 5, **dadurch gekennzeichnet, dass** die Konzentration des Markes zwischen 20 und 40 % liegt.

7. Verfahren gemäß irgendeinem der Ansprüche 4 bis 6, **dadurch gekennzeichnet, dass** der Beschichtungssaft ferner eine oder mehrere Zutaten enthält, die aus der Gruppe bestehend aus Farbstoffen, Nahrungsmittel -säuren und / oder -aromen ausgewählt werden.

8. Verfahren gemäß irgendeinem der Ansprüche 2 bis 7, **dadurch gekennzeichnet, dass** die Obststücke vor dem Entlüftungsschritt gefroren werden.

9. Verfahren gemäß irgendeinem der Ansprüche 1 bis 8, **dadurch gekennzeichnet, dass** die Obststücke ausgewählt werden aus der Gruppe bestehend aus : Äpfeln, Birnen, Orangen, Trauben, Melonen, Pfirsichen, Bananen, Kiwis, Litchis, Pampelmusen, Zitronen, Limonen, Himbeeren, Papaya, Kirschen, Ananas, Durian, Erdbeeren, Brombeeren, Heidelbeeren, Blaubeeren, Boysenbeeren, Johannisbeeren, schwarzen Johannisbeeren, Guaven, Mandarinen, Mangos, Granadillas und Mischungen aus denselben.

## Revendications

1. Procédé de préparation d'une salade de fruits congelée, dans lequel des morceaux de fruits surgelés ou congelés sont recouverts d'un jus d'enrobage comestible et **caractérisé en ce que** ledit jus d'enrobage a une pression osmotique qui est égale ou supérieure à la pression osmotique des morceaux de fruits.

2. Procédé selon la revendication 1, **caractérisé en ce que** ledit procédé comprend les étapes suivantes :
- on remplit un récipient de préparation fermé hermétiquement et agité en continu de morceaux de fruits,
- on désaère ledit récipient,
- on dose le jus d'enrobage dans ledit récipient, et
- on procède à une cryogénie du mélange.

3. Procédé selon la revendication 2, **caractérisé en outre en ce que** l'étape de désaération dudit récipient comprend la réduction de la pression à 0,2 bar ou moins.

4. Procédé selon l'une quelconque des revendications 1 à 3, **caractérisé en ce que** le jus d'enrobage comprend du sucre et/ou de la purée de fruits.

5. Procédé selon la revendication 4, **caractérisé en ce que** la concentration en sucre se situe entre 10% et 25%.

6. Procédé selon la revendication 4 ou 5, **caractérisé en ce que** la concentration en purée se situe entre 20% et 40%.

7. Procédé selon l'une quelconque des revendications 4 à 6, **caractérisé en ce que** le jus d'enrobage comprend en outre un ou plusieurs ingrédients choisis parmi le groupe constitué de colorants, d'acides alimentaires et/ou d'arômes.

8. Procédé selon l'une quelconque des revendications 2 à 7, **caractérisé en ce que** les morceaux de fruits sont congelés avant l'étape de désaération.

9. Procédé selon l'une quelconque des revendications 1 à 8, **caractérisé en ce que** les morceaux de fruits sont choisis parmi le groupe constitué de : pommes, poires, oranges, raisins, melons, pêches, bananes, kiwis, litchis, pamplemousses, citrons, citrons limes, framboises, papayes, cerises, ananas, durians, fraises, mûres, myrtilles, airelles, boysenberries, groseilles rouges, cassis, goyaves, mandarines, mangues, grenadilles et/ou un de leurs mélanges.
